Europäisches Patentamt

European Patent Office

Office européen des brevets

(11) Publication number: **0 191 228**
A2

# EUROPEAN PATENT APPLICATION

(21) Application number: 85308300.4

(51) Int. Cl.⁴: **B 01 D 45/14**

(22) Date of filing: 14.11.85

(30) Priority: 19.11.84 FI 844539

(71) Applicant: **OY A W ENBOM AB, P.O. Box 27, SF-00301 Helsinki 30 (FI)**

(43) Date of publication of application: 20.08.86
Bulletin 86/34

(72) Inventor: **Vatunen, Markku Tapani, Pohjolantie 12 A, SF-04230 Kerava (FI)**

(84) Designated Contracting States: **AT BE CH DE FR GB IT LI NL SE**

(74) Representative: **Barlow, Roy James et al, J.A.KEMP & CO. 14, South Square Gray's Inn, London WC1R 5EU (GB)**

(54) Device for purifying gases.

(57) The invention relates to a device for purifying gases. The device comprises a receptacle (1), which is divided by a partition (4) equipped with a central opening (8) into a lower chamber (5) and an upper chamber (6, 7), whereby a central inlet (2) for the gases to be purified is provided at the bottom of the lower chamber and a central outlet (3) for the purified gases is provided at the top of the upper chamber, and at the bottom of the upper chamber there is an impeller (22) rotating round a vertical axis, connected with the central opening of the partition. The upper part (7) of the upper chamber has the shape of a troncated cone, the entire periphery of the upper chamber (6, 7) is equipped with a double mantle (10, 12; 11, 13) whereby in the cylindrical part (10) of the interior mantle openings (16) are thus distributed along the periphery, that the material flow generated by the impeller (22) is made to pass by these openings, and in the upper part of the conical interior mantle (12) there are openings (17) distributed along the periphery, the spaces (14, 15) between the interior mantle and the exterior mantle in the cylindrical lower part and in the conical upper part are separated by a partition (18) equipped with openings (19), and the space (14) in the cylindrical lower part between the interior mantle and the exterior mantle is separated from the lower chamber (5) by a partition (20) equipped with openings (21).

1

Device for purifying gases

This invention relates to a device for purifying gases which comprises a receptacle divided by a partition with a central opening into an upper chamber and a lower chamber, whereby a central inlet for the gas to be purified is supplied at the bottom of the lower chamber and a central outlet for the purified gas is supplied at the top of the upper chamber, and an impeller rotating round a vertical axis and connected with the central opening of the partition is supplied at the bottom of the upper chamber.

The Finnish patent application 834 370 discloses a device for purifying gases, which comprises a cyclone forming a pre-purifying section, a pre-washing section placed on top of it, into which the central tube of the cyclone is inserted, and a centrifugal section placed on top of the pre-washing section, which by a central connecting tube is in contact with the pre-washing section, and in which the impeller rotating round a vertical axis is placed in a housing of centrifugal pump type, to the discharge outlet of which a guide plate ascending in a spiral is connected. The pre-washing section and the centrifugal section correspond to the lower chamber and upper chamber mentioned above. The cylindrical mantle of the centrifugal section comprises a vertical slot at two opposite points parallel to the diameter, an exterior mantle adapted at these slots so as to form vertical canals, and in connection with the lower end of these canals there are openings in the partition between the pre-washing section and the centrifugal section. In addition, the device is equipped with means for spraying liquid into the central tube of the cyclone part and into the connecting tube between the pre-washing section and the centrifugal section parallel to the main flux of the gas flow.

A good purification efficiency has been achieved by this device, due to the fact that the angular speed of the gas flowing in the same direction through the entire device is altered in different parts of the device so that the angular speed decreases in the pre-washing section subsequent to the cyclone section, after which it increases again in the centrifugal section under the action of the impeller until it is at least equal to the speed in the cyclone section. In addition, the liquid sprayed into the connecting tube between the central tube of the cyclone section and the pre-washing section humectates the solid particles comprised in the gas at the same time as there are openings generating a strong turbulence in the parts of the impeller blades that rotate at a lower speed. The effect is also increased by the vertical slots in the mantle of the centrifugal section, through which part of the material flow recirculates to the pre-washing section, into which the heavy particles settle, whereas the unsufficiently humectated and thus still light particles are flung into a new circulation in the flow ascending into the centrifugal section.

The object of this invention is to accomplish a device for purifying gases of the type above, the purifying efficiency of which is still better than that of the device described above.

According to the invention this is achieved because the top of the upper chamber has the form of a truncated cone, and the entire periphery of the upper chamber is furnished with a double mantle, whereby the cylindrical part of the interior mantle has openings along the periphery thus distributed that the gas flow ascending in a spiral is forced by the impeller to pass by these openings, and the top of the conical part of the interior mantle has openings distributed along the periphery of the mantle, the spaces between the interior mantle and the exterior mantle in the cylindrical part and the conical part are separated from each other by partitions with openings, and the space between the interior mantle and the exterior mantle in the cylindrical part is separated from the lower chamber by a partition with openings.

The total surface area of the openings in the cylindrical interior mantle of the upper chamber is then advantageously appr. 0,2-1% of the surface area of the interior mantle, and the total surface area of the openings in the conical interior mantle is appr. 0,3-1% of the surface area of the conical interior mantle. The openings concerned may be constituted of elongated slots, files of holes or single holes. The distance between the interior mantle and the exterior mantle of the upper chamber is such that the ratio of its diameter to the diameter of the cylindrical interior mantle is advantageously 0,05-0,1. In the space between the interior mantle and the exterior mantle of the upper chamber the total surface area of the openings of the partition between the upper chamber and the lower chamber is thus smaller than the total surface area of the openings of the partition between the conical part and the cylindrical part of the upper chamber in the said space.

The invention is described more in detail below with reference to the embodiments of the device according to the invention illustrated by the enclosed drawings.

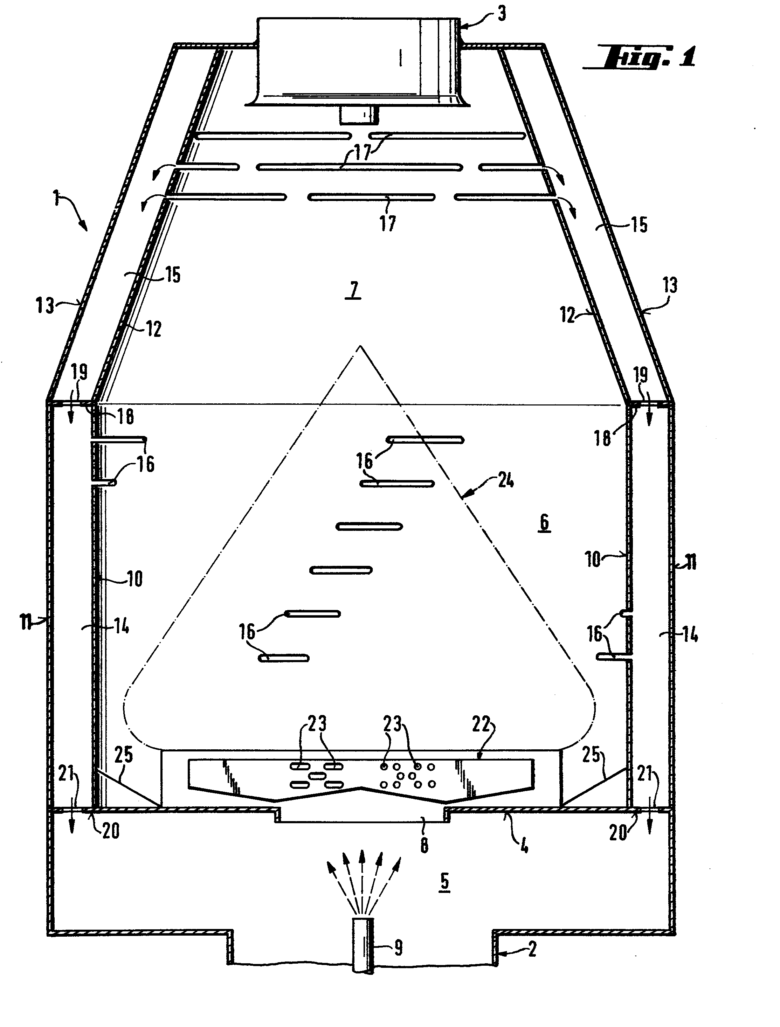

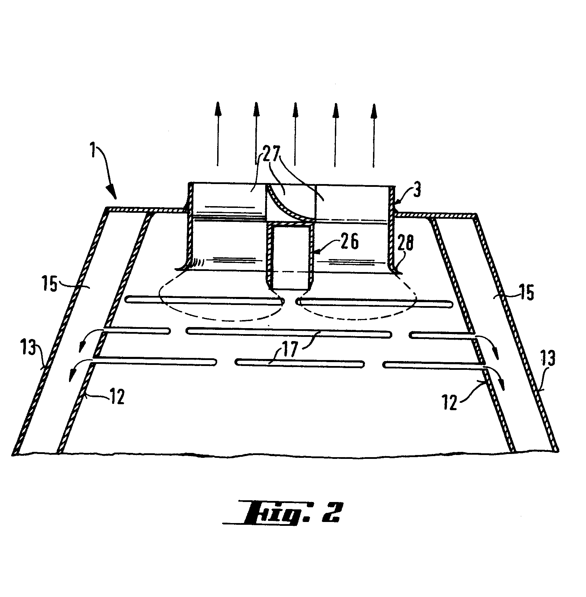

Figure 1 is a schematic representation of a section of an embodiment of the device according to the invention, and figure 2 illustrates correspondingly the top of the device according to figure 1, in which the outlet of the purified gas has been designed according to a particularly advantageous embodiment.

The device according to the invention illustrated in figure 1 comprises a receptacle 1, at the bottom of which is a central inlet 2 and at the top an equally central outlet 3. The receptacle 1 is divided by a partition 4 into a lower chamber 5 and an upper chamber 6, 7. The partition 4 has a central opening 8, through which the lower chamber and the upper chamber communicate. In the inlet 2 of the lower chamber 5 there is a nozzle 9 for spraying the liquid upwards into the opening 8 of the partition 4. The upper chamber comprises a cylindrical lower part 6 and a truncated conical upper part 7. The entire periphery of the upper chamber 6, 7 is equipped with a double mantle 10, 11, 12, 13, the distance between the interior mantle 10, 12 and the exterior mantle 11, 13 being then advantageously such that the ratio of its diameter to the diameter of the cylindrical interior mantle 10 is 0,05:1 - 0,1:1. The upper chamber 6, 7 can be so dimensioned that the ratio of the height of the conical upper part 7 to the height of the cylindrical lower part 6 is 0,7:1 - 1:1, whereas the ratio of the diameter of the interior mantle 10 of the cylindrical lower part 6 to the height of the cylindrical lower part is 0,8:1-1,4:1. The double mantle 11,13 of the conical upper part 7 forms a 10-30$^{\circ}$ angle to the vertical direction.

The interior mantle 10 of the cylindrical lower part 6 of the upper chamber is equipped with openings 16, which in the illustrated embodiment comprise elongated slots. In the presented case these slots 16 have been disposed into four groups placed with regular intervals along the periphery of the interior mantle 10, whereby the slots in each group have been graded upwards, their length growing from the bottom upwards. The slots 16 in the illustrated embodiment are disposed in the interior mantle 10 of the cylindrical lower part 6 of the upper chamber so that the lowest third in the vertical direction is without slots. Instead of being elongated slots the openings 16 can be hole files or single holes, and they can be disposed in a different way than the illustrated case, e.g. with regular intervals along the periphery of the interior mantle 10. The total surface area of the openings 16 are advantageously appr. 0,2-1 % of the surface area of the cylindrical interior mantle 10 of the upper chamber.

The interior mantle 12 of the conical upper part 7 of the upper chamber is also supplied with openings 17, which seen vertically are mainly disposed on the area of the top-most third of the interior mantle. The openings 17 in the illustrated embodiment are also elongated slots distributed along the periphery of the interior mantle 12, but like the openings 16 of the cylindrical interior mantle 10 they can also be hole files or single holes.
The total surface area of the openings 17 is advantageously 0,3-1%
of the surface area of the interior mantle 12 of the conical upper
part 7 of the upper chamber.

The space 14, 15 between the interior mantle 10, 12 and the exterior mantle 11, 13 has a partition 18 at the junction of the
cylindrical lower part 6 of the upper chamber and the conical
upper part 7, in which there are choke openings 19 disposed with
regular intervals, the total surface area of which is smaller
than the total surface area of the openings 17 in the interior
mantle 12 of the conical upper part 7. The space 14 between
the interior mantle 10 of the cylindrical lower part 6 and the
exterior mantle 11 is further equipped with a partition 20 placed
at the bottom of the upper chamber, having choke openings 21
disposed with regular intervals, the total surface area of which
is smaller than the total surface area of the openings 19 of the
partition 18 placed higher in the same space.

The cylindrical part 6 of the upper chamber has in connection
with the communicating opening 8 an impeller 22, of which the
blades comprise in the zone rotating at a lower peripheral speed
openings 23, which can be holes, as presented in the right
blade of the impeller, or slots, as presented in the left
blade. The driving motor of the impeller 22 not illustrated in
the drawing is placed in the cover formed by the central cone
24 represented by a dash line. In the illustrated embodiment the
base of the central cone is rounded, but this is not necessary,
the central cone can also be an ordinary cone. The central cone
24 has been so dimensioned, that the ratio of its maximal diameter to the diameter of the interior mantle 10 of the cylindrical
part 6 of the upper chamber is 0,7:1 - 0,95:1, and the ratio of
its height to the diameter of the said interior mantle 10 is
0,8:1 - 1,05:1. The impeller 22 has been surrounded by an inclined
guide surface 25, causing the material flow generated by the
impeller to ascend in a spiral.

6

By the device according to the invention an extremely good
separating effect is achieved also with gases that contain
the most finely pulverized solid particles. This high separating
effect is based on the special material circulating effect of the
device according to the invention, as follows.

The gas to be purified is conducted as a flow ascending in a
spiral into the inlet 2. As the gas flow reaches the lower chamber 5 its speed increases and the finely pulverized liquid sprayed
from the nozzle 9 humectates the particles included in the gas.
Through the opening 8 in the partition 4 the material flow enters
the range of influence of the impeller 22 which rotates at a high
speed. The openings 24 in the blades 23 of the impeller produce a
strong turbulence on the slip side of the blades, by means of
which the solid particles and the liquid are efficiently mixed.
The pressure also decreases on the slip side of the blades, thus
enabling the liquid to evaporate partially. Owing to these facts,
the mixing of the solid particles included in the liquid and in
the gas is extremely efficient, and thus the particles get humectated by the liquid and their weight increases. The impeller 22
generates a material flow, of which the velocity is considerably
higher than in the lower chamber 5, and the guide surface 25 makes
the flow ascend in spiral at an angle of appr. $10\text{-}30^{\circ}$. The
central cone 24 then prevents central whirling. The flow rate
produces a pressure effect through the openings 16 in the space 14
between the interior and the exterior mantles 10, 11 of the cylindrical lower part 6, under the action of which and by the
centrifugal force the sufficiently humectated particles, which
thus are considerably heavier than the main flow, pass through the
openings 16 of the interior mantle 10 into the space 14 between
the mantles. A moisture zone is also produced on the surface of
the cylindrical interior mantle 10.

The material flow rate decreases under the influence of
the friction and the shape of the central cone 24 as the flow
moves to the conical upper part 7, in which the rate increases again as a result of the conical shape and the choke effect of the offtake 3. The flow rate produces a pressure effect through the openings 17 of the conical interior mantle 12 in the space between the mantles 12, 13, under the action of which and by the centrifugal force the lighter solid and liquid particles accompanying the stream pass through the openings 17 into the space 15. The pressure in space 15 is higher than that of space 14. For this reason the flow passes from space 15 through the choke openings 19 into the space 14. Part of the particles return through the openings 16 of the cylindrical interior mantle 10 into the cylindrical part 6 of the upper chamber and are thus recirculated. At the same time they are made to pass through the moisture zone on the surface of the interior mantle 10. The rest continues downwards into the space 14 and passes through the choke openings 21 to the lower chamber 5. The sufficiently humectated and thus heavy particles settle to the bottom of the lower chamber 5, from where they are removed through an offtake which is not described. If light particles are still included in the flow coming through the choke openings 21, the material flow rate in the lower chamber suffices to lift these particles back into the absorbing effect of the impeller and thus once more into humidification and circulation as described above.

The purpose of the choke part of the purified gas outlet intruding in the conical part 7 of the upper chamber is to prevent the particle fall-out rotating up to the interior mantle 12 from passing into the outflow.

By changing the shape and the surface areas between the openings 16 and 17 of the interior mantle 10,12 and the choke openings of the partitions 18,20 in the space 14,15 between the mantles, the circulating properties of the device according to the invention can be changed within very large limits depending on the quality of the solid particles to be separated from the gas.

8

Figure 2 illustrates a construction connected with the outlet 3 of the device, which has the purpose of changing the rotating kinetic energy of the exhaust gas flow into an axial kinetic energy and at the same time that of preventing the solid particles from following the flow leaving the device.

This construction comprises a shaping body 26 placed in the centre of outlet 3, guide blades 27 placed behind this when seen in the direction of the flux, and a guide ring 28 connected with the edge of outlet 4 and intruding into the conical upper part 7 of the device.

In the described embodiment the shaping body 26 comprises a cylindrical hollow piece 26, of which the end towards the incoming direction of the flux is open. The ratio of the diameter of the piece 26 to the diameter of the outlet 3 is 1:10-1:2, and the piece is pushed in the incoming direction of the flux somewhat in front of the lower edge of outlet 3. The purpose of the shaping body 26 is generating a vacuum field, of which the shape is generally conical, of which the point is directed in the incoming direction of the flux and is placed on the centre axis of the flux. This vacuum field is illustrated by dash lines in the figure. The shaping body 26 can also be essentially conical so that the open base is directed in the incoming direction of the flux.

Behind the shaping body 26 in outlet 3 seen in the direction of the flux has been placed several, e.g. 6-18 radial guide blades 27, of which the cross-section is curved so that a tangent drawn to the front edge is essentially perpendicular to the longitudinal axis of the outlet and a tangent drawn to the back edge is essentially parallell to the longitudinal axis. The purpose of guide blades 27 is to change the vortex arriving to the outlet into an essentially axial flow.

9

The lower edge 3 of outlet 3 is additionally equipped with a curved or conical guide ring 28 projecting to the side, of which the purpose is to promote the shaping of the said vacuum field so that its effect does not reach the zone between the exterior wall of outlet 3 and the interior mantle of the conical upper part 7.

## Claims

1. A device for purifying gases comprising a receptacle (1), divided by a partition (4) equipped with a central opening (8) into a lower chamber (5) and an upper chamber (6,7), whereby a central inlet (2) for the gas to be purified is provided at the bottom of the lower chamber (5) and a central outlet for the purified gas is provided at the top of the upper chamber (6,7), and at the bottom of the upper chamber (6,7) is an impeller (22) rotating round a vertical axis and connected with the central opening (8) of the partition (4), c h a r a c t e r i z e d in that the upper end (7) of the upper chamber has the shape of a truncated cone, that the entire periphery of the upper chamber (6,7) is equipped with a double mantle (10, 12; 11, 13) whereby in the cylindrical part (10) of the interior mantle there are openings (17) thus distributed along the periphery of the mantle, that the material flow ascending in a spiral generated by the impeller (22) is made to pass by these openings, and in the upper part of the conical interior mantle (12) there are openings (17) distributed along the periphery of the mantle, the spaces (14;15) between the interior mantle (10, 12) and the exterior mantle (11, 13) in the cylindrical lower part (6) and the conical upper part (7) are separated by a partition (18) equipped with openings (19), and the space (14) in the cylindrical lower part (6) between the interior mantle (10) and the exterior mantle (11) is separated from the lower chamber (5) by a partition (20) equipped with openings (21).

2. A device according to claim 1, c h a r a c t e r i z e d in that the total surface area of the openings (16) in the cylindrical interior mantle (10) of the upper chamber (6,7) is approximately 0,2-1% of the surface area of the cylindrical interior mantle (10).

3. A device accroding to claim 1 or 2, c h a r a c t e r i z e d
in that the total surface area of the openings (17) of the conical interior mantle (12) of the upper chamber (6,7) is approximately 0,3-1% of the surface area of the conical interior mantle
(12).

4. A device according to claim 1, 2 or 3, c h a r a c t e r -
i z e d in that the openings (16) in the cylindrical interior
mantle (10) are placed mainly in the range of the top-most two
thirds of the mantle, when seen vertically.

5. A device according to any of claims 1-4, c h a r a c t e r -
i z e d  in that the openings (17) in the conical interior mantle
(12) are placed mainly in the range of the top-most third of the
mantle, when seen vertically.

6. A device according to any of the preceding claims, c h a -
r a c t e r i z e d  in that the mantles (12, 13) of the conical
upper part (7) of the upper chamber (6,7) form an angle of
10-30$o£ to the vertical direction.

7. A device according to any of the preceding claims, c h a -
r e c t e r i z e d  in that the ratio of the diameter to the
height of the interior mantle (10) of the cylindrical lower part
(6) of the upper chamber (6,7) is 0,8:1 - 1,2:1.

8. A device according to claim 7, c h a r a c t e r i z e d
in that the ratio of the height of the conical upper part (7)
of the upper chamber (6,7) to the height of the cylindrical lower
part (6) is 0,7:1 - 1:1.

9. A device according to any of the preceding claims, c h a -
a c t e r i z e d  in that the ratio of the distance between the
interior mantle (10, 12) of the upper chamber (6,7) and the
exterior mantle (11, 13) to the diameter of the cylindrical
interior mantle  (10) is 0,05:1 - 0,1:1.

10. A device according to any of the preceding claims, c h a r a c t e r i z e d in that the total surface area of the openings (19) of the partition (18) between the conical and the cylindrical part of the space (14, 15) between the interior mantle (10, 12) and the exterior mantle (11, 13) of the upper chamber (6, 7) is smaller than the total surface area of the openings (17) of the conical interior mantle (12).

11. A device according to claim 10, c h a r a c t e r i z e d in that the total surface area of the openings (12) of the partition (20) between the space (14) between the cylindrical interior mantle (10) and the exterior mantle (11) and the lower chamber (5) is smaller than the total surface area of the openings (19) of the partition at the top of the said space (14).

12. A device according to any of the preceding claims, c h a - r a c t e r i z e d in that the openings (16, 17) of the interior mantle (10, 12) of the upper chamber (6,7) are formed by elongated slots, files of holes or individual holes.

13. A device according to any of the preceding claims, in which the lower chamber (5) is equipped with means (9) for spraying washing liquid into it, c h a r a c t e r i z e d in that the washing liquid has been adapted to be sprayed upwards into the central opening (8) of the partition (4) between the upper chamber (6, 7) and the lower chamber (5).

14. A device according to any of the preceding claims, in which a central cone (24) is placed in the cylindrical lower part (6) of the upper chamber, c h a r a c t e r i z e d in that the ratio of the maximal diameter of the central cone (24) to the diameter of the interior mantle (10) of the cylindrical lower part (6) of the upper chamber is 0,7:1 - 0,95:1, and the height of the point of the central cone from the bottom (4) of the upper chamber (6, 7) is 0,8-1,05 times the diameter of the cylindrical part (6) of the upper chamber.

13

15. A device according to any of the preceding claims, c h a -
r a c t e r i z e d  in that the outlet (3) is equipped with
a hollow body (26) open in the incoming direction of the flux,
placed in the centre of the outlet opening, as well as with several radial guide blades (27) placed behind this when seen in the
direction of the flux.

16. A device according to claim 14, c h a r a c t e r i z e d  in
that the hollow body (26) is cylindrical or conical, whereby
the base of the conical body is open in the direction of the flux.

17. A device according to claim 14 or 15,  c h a r a c t e r -
i z e d  in that the hollow body (26) projects to the front of
the lower edge of the outlet.

18. A device according to claim 15 or 16,  c h a r a c t e r -
i z e d  in that the cross-section of the guide blades (27) is
curved so that a tangent drawn to their front edge is essentially
perpendicular to the longitudinal axis of the outlet (3) and a
tangent drawn to their back edge is essentially parallel to the
longitudinal axis.

19. A device according to any of claims 13-17,  c h a r a c t e r-
i z e d  in that the outlet (3) is equipped with a curved or
conical guide ring (28) extending from its lower edge to the si-
des.

0191228

*Fig. 1*

**Fig. 2**